# EUROPEAN PATENT APPLICATION

(11) **EP 2 779 069 A1**
(43) Date of publication of application: **17.09.2014**
(21) Application number: 14158743.6
(22) Date of filing: 11.03.2014
(51) Int. Cl.: G06Q 20/32, G06Q 20/42, G06Q 20/38

(54) **Method and system for managing a transaction**

(30) Priority: 11.03.2013 US 201361775737 P
(71) Applicant: Nagravision S.A., 1033 Cheseaux-sur-Lausanne (CH)
(72) Inventor: Wendling, Bertrand, 01220 Divonne-les-Bains (FR); Deprez, Olivier, 13600 La Ciotat (FR); Sarda, Pierre, 1040 Echallens (CH); Bellocchio, Marc, 13400 Aubagne (FR)
(74) Representative: Leman Consulting S.A.

(57) **Abstract**

A method of managing a transaction between a user intending to acquire a product and a merchant offering products. The user has a first terminal for communicating with said merchant and a second terminal for communicating with the financial institution. At least one transmission during the transaction is performed by near field communications. In addition, security is enhanced because longer validation codes can be used by the method.

## Description

### TECHNICAL FIELD

The present invention concerns a method for purchasing a product, for authenticating the purchaser of the product and for managing the payment of the purchased product. It further concerns a system for implementing this method.

More specifically, the invention relates to a method for managing a transaction between a user intending to acquire a product and a merchant offering products, the user being registered at a financial institution and having an account with the financial institution, said user having a first terminal for communicating with said merchant and a second terminal for communicating with the financial institution.

The invention further relates to a system of managing a transaction between a user intending to acquire a product and a merchant offering products, the user being registered at a financial institution and having an account with the financial institution.

### BACKGROUND ART

Near Field Communication Technology, known by the acronym "NFC", is a wireless, high frequency communication technology, having a range of a few centimeters, for the exchange of information between multiple devices. This technology is derived from a combination of a smart card interface and a contactless reader in a single device.

An NFC device is able to communicate with other NFC devices as well as devices operating in accordance with the ISO 14443 standard (contactless smart cards).

NFC standards cover the NFC communication protocols and data exchange formats and are based on existing standards for radio frequency identification (RFID) such as ISO/IEC 14443, FeliCa and ISO/IEC 18092. They include standards defined by the "NFC Forum", which was founded in 2004 by Nokia, Philips and Sony and includes more than 180 members.

NFC is an extension of RFID technology, allowing two-way communication between two devices, while previous systems, such as contactless smart cards, allowed only one-way communication.

NFC technology is usable only over a short distance of about a few centimeters, which implies a voluntary use and prevents unintentional use.

NFC devices can be active or passive. A passive NFC device, such as a tag, a smart card or a simple chip affixed to an object contains information only readable by other NFC-enabled devices. A passive NFC device is powered by the electromagnetic field generated by a reader (active device) and therefore does not need its own power supply.

An active NFC device, however, is a device that generates an electromagnetic field. This generation can be done to communicate with a passive device (described above) or to establish a communication channel between two active devices.

The fact that a device like a smartphone has a power supply does not necessarily mean that it will work in active mode only. That is, a smartphone can handle the NFC interface in active or passive modes. In passive mode, the device emulates a chip card. In this mode, the smartphone (or any other portable device such as tablets) will store, in a secure memory, information that is normally stored in a card. Thus, when the smartphone detects an electromagnetic field, it can access the secure memory and a corresponding device having NFC capacities will be able to read information in passive mode from the secure memory.

The following are examples of known applications that use NFC technology:
- payment using a credit card or contactless mobile device (e.g., mobile phone, smartphone, laptop, tablet computer, etc.) on a contactless payment terminal;
- payment for a parking space on a terminal accepting contactless payment using an NFC mobile terminal;
- contactless purchase of a ticket and contactless validation of a ticket displayed on a mobile phone;
- management of coupons, loyalty points, etc. in a store, at retailers, etc. (e.g., couponing);
- accessing and starting a vehicle using a mobile phone;
- reading product information (e.g., price, composition, allergy, etc.) in a store;
- controlling physical access to premises (e.g., meeting room, business, classroom, etc.);
- exchanging profiles between users of a social network or a game by bringing phones close together (e.g., user peer- to-peer communications);
- reading an electronic business card with a PDA (Personal Digital Assistant);
- synchronizing Internet bookmarks and contacts between a PDA and a mobile phone;
- recovering a key to a WiFi access point approaching an NFC device from an authorized terminal; and
- accessing automation features of a building.

Presently, online access to some confidential pieces of information as well as online payments for purchasing products such as physical products (e.g., books, electronic devices, food, etc.) or digital products (e.g., access right to a pay TV event, online lesson, etc.) may be quite complex and cumbersome for users. When making of a payment for purchasing a product, the user has to log onto the bank's web server and must enter a personal code. If a validation or authentication procedure is successful, the user receives another code through e.g., SMS message or an e-mail on a user's first terminal; the user must enter the code with a keyboard or a remote control device on a user's second terminal. To enhance security, the code is usually quite long and the risk of errors during the typing of the code is great. Moreover, the communication path between the remote control and the receiver is usually not trusted. Therefore, the security of such a transaction is not optimal.

### SUMMARY OF THE INVENTION

The invention disclosed herein seeks to simplify the process of entering a code in a terminal and to enhance the security.

An object of the disclosed invention is achieved by a method as defined in the preamble and comprising the steps of:
- connecting the user's first terminal with said merchant;
- sending to said merchant, through said user's first terminal, a request containing an identifier of the product the user intends to acquire, information concerning the identity of the user and information concerning the financial institution at which the user is registered;
- connecting said merchant with said financial institution and transmitting a request to the financial institution, said request containing at least a mechanism for identifying the user and an indication concerning the amount of the transaction;
- connecting said financial institution to said user's second terminal, transmitting a message containing a validation code from the financial institution to said user's second terminal and transmitting to said merchant, from said financial institution, a response containing a mechanism for enabling the verification of said validation code;
- upon reception of said validation code by the user's second terminal, transmitting said validation code from the user's second terminal to the user's first terminal, said transmission being performed by near field communications;
- sending to the merchant said validation code received by the user's first terminal from the user's second terminal;
- verifying the validation code received by the merchant from the user's first terminal by using the mechanism for verifying said validation code received from the financial institution; and
- validating the transaction if the verification step yields a positive result, said validation step comprising the steps of debiting the user's account an amount corresponding to the amount of the transaction and crediting a merchant's account the amount corresponding to the amount of the transaction, and providing the user with the acquired product.

An object of the disclosed invention is also achieved by a system of managing a transaction between a user intending to acquire a product and a merchant offering products, the user being registered at a financial institution and having an account with the financial institution, said system comprising:
- a user's first terminal for communicating with a merchant server;
- a user's second terminal for communicating with a financial institution server; wherein said system is adapted to:
- connect the user's first terminal with said merchant server;
- send to the merchant server, through the user's first terminal, a request containing an identifier of the product the user intends to acquire, information concerning the identity of the user and information concerning the financial institution at which the user is registered;
- connect the merchant server with the financial institution server and transmit a request to the financial institution server, the request containing a mechanism for identifying the user and an indication concerning the amount of the transaction;
- connect the financial institution server to the user's second terminal, transmit a message containing a validation code from the financial institution server to the user's second terminal and transmit to the merchant server, from the financial institution server, a response containing a mechanism for enabling the verification of the validation code;
- upon reception of the validation code by the user's second terminal, transmit the validation code from the user's second terminal to the user's first terminal, the transmission being performed by near field communications;
- send to the merchant server the validation code received by the user's first terminal from the user's second terminal;
- verify the validation code received by the merchant server from the user's first terminal by using the mechanism for verifying the validation code received from the financial institution server; and
- validate the transaction if the verification yields a positive result, said validation comprising debiting the user's account an amount corresponding to the amount of the transaction and crediting a merchant's account the amount corresponding to the amount of the transaction, and providing the user with the acquired product.

In actual 3D payments today, a merchant providing products that can be purchased by a user must be connected to an online banking system. The user or client of this merchant must also connect a user's first device to a bank or a financial institution where the user is registered and owns an account. The user uses his/her own credentials to validate the purchase. The bank the user is registered with will then send the user an SMS message or an e-mail comprising a token to validate the transaction on the merchant site. The user needs to wait for the reception of the bank token, and then types it on the web interface, usually from another device.

The embodiments disclosed herein simplifies this process by adding a direct link between the device receiving the bank's token and the computer's browser waiting for the token to be entered by the user. Due to this direct link, it is not necessary to read the token on a first device and then type it on a second device. Thus, the token can be longer than prior art tokens, which enhances the security of the transaction. Moreover, the risk of false introduction of a token is lowered and the risk that the communication between the first and the second devices will be spied on is lowered.

### BRIEF DESCRIPTION OF DRAWING

The present invention and its advantages will be better understood with reference to the enclosed drawings and to the following detailed description, in which:

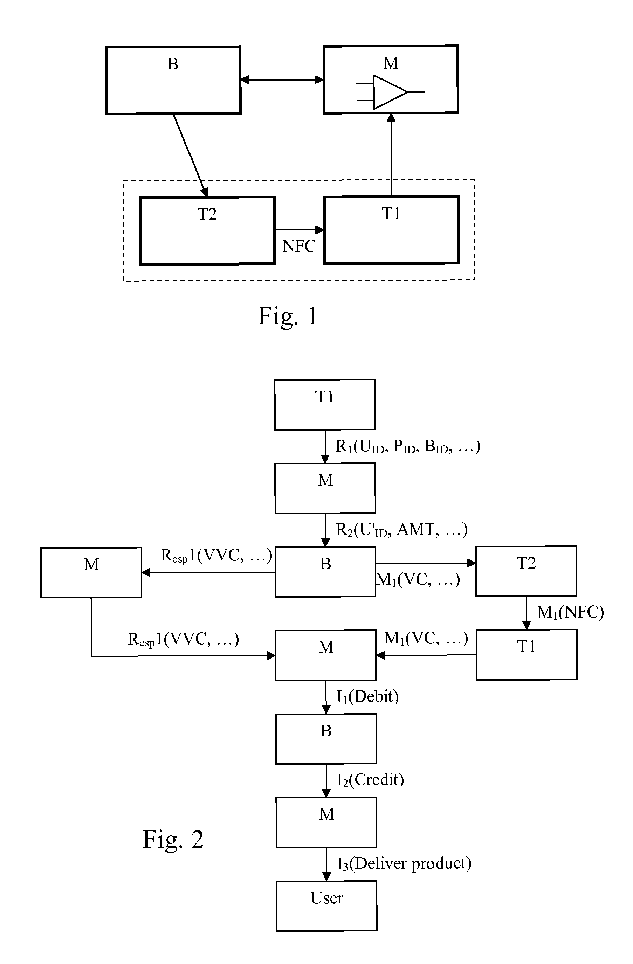

Fig. 1 illustrates a system carrying out the method disclosed herein; and
Fig. 2 is a block diagram illustrating the method disclosed herein.

### DETAILED DESCRIPTION OF THE INVENTION

According to the invention disclosed herein and with reference to the figures, the disclosed method comprises a first step whereby a user identifies a merchant M that offers a product P the user intends to acquire. Once identified, the user uses a first terminal T1 to connect to the merchant M. In a most common embodiment, the user's first terminal T1 is a computer, the merchant owns an online shop and the user's first terminal T1 connects itself to the merchant through the Internet to purchase the product.

Once the user's first terminal T1 is connected to the merchant M or to the merchant's online shop, the user chooses the product P to be acquired. The user's first terminal T1 forms a request R₁ containing at least a user identifier U_{ID}, a product identifier P_{ID} and a financial institution identifier B_{ID}.

The user identifier U_{ID} may not be necessary on the merchant's level, but is used by the financial institution B managing the payment associated with the transaction. The product identifier P_{ID} is necessary to determine which product the user intends to purchase. Once the product P is identified, the merchant is able to determine the cost for that product (i.e., the amount AMT of the transaction). The identifier of the financial institution B_{ID} is used by the merchant to determine which financial institution to deal with and to contact.

The request R₁ that is sent from the user to the merchant is usually in unencrypted. It should be appreciated, however, that the request could be encrypted, for example, when the merchant requires a registration of its users prior to authorizing a transaction. The user identifier U_{ID} should, however, be unencrypted to enable the merchant to determine which user sent the request.

Once the merchant receives the request R₁, the merchant determines, from this request, the financial institution B to deal with. This piece of information is contained in the request sent from the user. The merchant prepares a request R₂ intended to be sent to the concerned financial institution, said request R₂ contains at least one mechanism for identifying the user, which can be the user identifier U_{ID}, and an indication of an amount AMT. The amount corresponds to the amount due for the purchase of the product P the user intends to acquire. The request R₂ can be sent unencrypted or encrypted.

When the request R₂ is received by the financial institution B, the user's identification is read. The financial institution determines if the user is registered and has an account and, if the user is registered and has an account, determines if the user is allowed to make a payment for the amount AMT indicated in the request. If one of these conditions is not satisfied, an error message can be sent to the merchant, which, in turn can send or display a message on the user's first and/or second terminal. The transaction is not allowed in this case.

If the conditions are satisfied, the financial institution B sends a message M₁ containing a validation code VC to a second terminal T2 of the user. This second terminal is typically a mobile terminal such as e.g., a mobile phone, smartphone, PDA or tablet. A personal and specific message can be sent to the user if he has to be registered at the financial institution. The message could be in unencrypted or encrypted.

The financial institution further sends a response Rₑₛₚ1 to the merchant, said response containing a mechanism VVC for verifying the validity of the validation code VC. Further details concerning this mechanism will be given below.

The message M₁ sent from the financial institution to the user's second terminal T2 is transmitted to the user's first terminal T1. Contrary to prior art methods, the transmission of the validation code VC or token from the second terminal T2 to the first terminal T1 is not done by manually copying the validation code. Instead, the transmission is done by using near field communication (NFC) technology.

In order to enable the near field communication transmission between the user's second terminal T2 and the first terminal T1, two specific applications are provided. On the user's first terminal, a browser application is adapted to detect and recognize NFC systems. Once detected, a communication with the detected terminal is initiated to retrieve the validation code.

On the user's second device, a dedicated application is also available. This application receives the validation code or token from the financial institution through e.g., SMS reception, and is adapted to transmit said validation code to the user's first terminal T1 through NFC. Thus, the validation code is automatically received by the first terminal T1 and can be used by this terminal.

According to a common embodiment, the first and second terminals are separate devices. The first terminal may be e.g., a desktop computer, portable computer, tablet or smartphone, or any device enabling a connection to the merchant's online shop. The second terminal may be e.g., a desktop computer, portable computer, tablet, smartphone or mobile phone, or any device adapted to receive a personal message from the financial institution.

In addition, both terminals could be embedded in the same device such as e.g., a computer, tablet or smartphone. In this case, three different communication paths are used. One is a point-to-point remote communication path between the financial institution and the user's terminal. Another is a remote communication path between the merchant and the user's terminal and the third is a local communication path using NFC.

Because it is not necessary to copy an alpha-numeric code, the length of this code can be much longer than ones used in the prior art. This provides a much higher security level as the length of the code is an important parameter for security.

As the near field communication technology has a range of a few centimeters, both user terminals must be close to each other. Accordingly, it is not necessary to encrypt the transmission. However, the transmission could be encrypted, for example for forcing a pairing between the user's devices.

Once the code is transmitted from the user's second terminal T2 to the user's first terminal T1, the code is transmitted to the merchant M. In a prior step, the merchant received a response Rₑₛₚ1 from the financial institution containing a mechanism for verifying the validation code. The mechanism is used to determine if the validation code received from the user's first device is valid.

The mechanism could be the validation code itself or a value that can be used to check the code. According to a specific embodiment, the mechanism for verifying the validity of the code could be a hash of this code or the result of an encryption of the code. According to another embodiment, the response Rₑₛₚ1 sent by the financial institution contains the validation code and the message sent from the first terminal T1 to the merchant contains a hash or the result of encryption applied on the validation code. As the merchant knows the original validation code, it can check the validity of the code received from the second terminal if it has the corresponding keys.

If the code is invalid, the transaction is not finalized. An error message can be sent to the user on its first and/or second terminal. The transaction can also be stopped without warning.

However, if the code is valid, an instruction I₁ is sent from the merchant to the financial institution. The instruction informs the financial institution that the transaction must be finalized. This means that the amount AMT must be debited from the user's account and a corresponding amount must be credited to the merchant's account.

Once the amount is credited to the merchant's account, the product P is sent to the user in a manner that will depend on the type of product purchased by the user. As already explained, the product can be a right, key, service or a physical object, for example.

The invention disclosed herein enhances security due to the fact that a longer validation code can be used, that there is no risk of introducing errors while copying the code and that the validation code can only be read by a terminal that is in close proximity from the emitting terminal. Moreover, as can be appreciated, the method disclosed herein simplifies the procedure to render it less cumbersome for the user.

## Claims

1. A method of managing a transaction between a user intending to acquire a product and a merchant offering products, the user being registered at a financial institution and having an account with the financial institution, the user having a first terminal for communicating with the merchant and a second terminal for communicating with the financial institution, said method comprises the steps of:
- connecting the user's first terminal with said merchant;
- sending to the merchant, through the user's first terminal, a request containing an identifier of the product the user intends to acquire, information concerning the identity of the user and information concerning the financial institution at which the user is registered;
- connecting the merchant with the financial institution and transmitting a request to the financial institution, the request containing a mechanism for identifying the user and an indication concerning the amount of the transaction;
- connecting the financial institution to the user's second terminal, transmitting a message containing a validation code from the financial institution to the user's second terminal and transmitting to the merchant, from the financial institution, a response containing a mechanism for enabling the verification of the validation code;
- upon reception of the validation code by the user's second terminal, transmitting the validation code from the user's second terminal to the user's first terminal, the transmission being performed by near field communications;
- sending to the merchant the validation code received by the user's first terminal from the user's second terminal;
- verifying the validation code received by the merchant from the user's first terminal by using the mechanism for verifying the validation code received from the financial institution; and
- validating the transaction if the verification step yields a positive result, said validation step comprising the steps of debiting the user's account an amount corresponding to the amount of the transaction and crediting a merchant's account the amount corresponding to the amount of the transaction, and providing the user with the acquired product.

2. The method according to claim 1, wherein the user's first terminal is a computer.

3. The method according to claim 1, wherein the user's second terminal is a mobile terminal.

4. The method according to claim 3, wherein the mobile terminal is selected from the group comprising a mobile phone, smartphone, personal digital assistant and tablet.

5. The method according to claim 1, wherein the user's first terminal and second terminal are embedded in a same device.

6. A system of managing a transaction between a user intending to acquire a product and a merchant offering products, the user being registered at a financial institution and having an account with the financial institution, said system comprising:
- a user's first terminal for communicating with a merchant server;
- a user's second terminal for communicating with a financial institution server;
wherein said system is adapted to:
- connect the user's first terminal with said merchant server;
- send to the merchant server, through the user's first terminal, a request containing an identifier of the product the user intends to acquire, information concerning the identity of the user and information concerning the financial institution at which the user is registered;
- connect the merchant server with the financial institution server and transmit a request to the financial institution server, the request containing a mechanism for identifying the user and an indication concerning the amount of the transaction;
- connect the financial institution server to the user's second terminal, transmit a message containing a validation code from the financial institution server to the user's second terminal and transmit to the merchant server, from the financial institution server, a response containing a mechanism for enabling the verification of the validation code;
- upon reception of the validation code by the user's second terminal, transmit the validation code from the user's second terminal to the user's first terminal, the transmission being performed by near field communications;
- send to the merchant server the validation code received by the user's first terminal from the user's second terminal;
- verify the validation code received by the merchant server from the user's first terminal by using the mechanism for verifying the validation code received from the financial institution server; and
- validate the transaction if the verification yields a positive result, said validation comprising debiting the user's account an amount corresponding to the amount of the transaction and crediting a merchant's account the amount corresponding to the amount of the transaction, and providing the user with the acquired product.

7. The system according to claim 6, wherein the user's first terminal is a computer.

8. The system according to claim 6, wherein the user's second terminal is a mobile terminal.

9. The system according to claim 8, wherein the mobile terminal is selected from the group comprising a mobile phone, smartphone, personal digital assistant and tablet.

10. The system according to claim 6, wherein the user's first terminal and second terminal are embedded in a same device.
